# EUROPÄISCHE PATENTANMELDUNG

(11) **EP 4 230 040 A1**
(43) Veröffentlichungstag der Anmeldung: **23.08.2023**
(21) Anmeldenummer: 22157514.5
(22) Anmeldetag: 18.02.2022
(51) Int. Cl.: A01N 37/02, A01P 1/00, A01P 7/00, A01P 17/00, A01N 31/02, A01N 31/08, A01N 31/16

(54) **VERWENDUNG VON HOLZESSIG UND/ODER BAMBUSESSIG UND/ODER DEREN BESTANDTEILEN ZUR BEHANDLUNG DES BEFALLS UND ALS REPELLENT ZUR PROPHYLAXE GEGEN DEN BEFALL VON PFLANZEN DURCH BAKTERIEN DER GATTUNG XYLELLA**

(71) Anmelder: Resch, Barbara, 84169 Altfraunhofen (DE)
(72) Erfinder: Resch, Barbara, 84169 Altfraunhofen (DE)
(74) Vertreter: Glück Kritzenberger Patentanwälte PartGmbB

(57) **Zusammenfassung**

Beschrieben wird die Verwendung von Holzessig und/oder Bambusessig und/oder deren Bestandteilen zur Behandlung des Befalls von Pflanzen durch Bakterien der Gattung *Xylella* sowie die Verwendung von Holzessig und/oder Bambusessig und/oder deren Bestandteilen als Repellent gegen Bakterien der Gattung *Xylella* übertragende Insekten zur Prophylaxe gegen den Befall von Pflanzen durch Bakterien der Gattung *Xylella.*

## Beschreibung

### Technisches Gebiet

Die Erfindung betrifft die Verwendung von Holzessig und/oder Bambusessig und/oder deren Bestandteilen zur Behandlung des Befalls und als Repellent zur Prophylaxe gegen den Befall von Pflanzen durch Bakterien der Gattung *Xylella.*

### Stand der Technik

In Europa trat das Olivenbaumsterben zuerst in Süditalien auf. Bereits kurze Zeit nach dem erstmaligen Nachweis waren Ende 2013 auf der italienischen Halbinsel Salento ca. 8000 ha Olivenbaumplantagen betroffen. Im Jahr 2015 waren auf etwa 230.000 ha hunderttausende von Olivenbäumen befallen. Neben Europa wurde das Olivenbaumsterben auch in Olivenkulturen in Kalifornien, Argentinien und Brasilien nachgewiesen.

Derzeit dedroht die Erkrankung Olivenbäume und damit die Olivenölproduktion in ganz Italien, Spanien, Griechenland und Marokko. Aus diesen Ländern stammen in Summe mehr als 95% der Oliven, die zur Herstellung des für den europäischen Markt bestimmten Öls verwendet werden. Für die nächsten 50 Jahre wird alleine für Italien ein durch die Olivenkrankheit verursachter wirtschaftlicher Schaden von bis zu 5,6 Milliarden Euro prognostiziert.

Ursache des auch als olive quick decline syndrome (OQDS) bezeichneten Olivenbaumsterbens sind Bakterien der Art *Xylella fastidiosa.* Bei *Xylella fastidiosa* handelt es sich um ein aerobes, gramnegatives Bakterium aus der Familie *Lysobacteraceae.* Es besiedelt die Leitbündel (das Xylem) des Stamms, der Blattstiele und Blätter seiner Wirtspflanze. An diesen Stellen bildet das Bakterium einen Biofilm, der den Transport von Wasser und Nährstoffen durch die Leitungsbahnen blockiert. Befallene Olivenbäume trocknen dadurch aus und sterben letztlich durch Wassermangel.

Neben Olivenbäumen befällt *Xylella fastidiosa* noch eine ganze Reihe anderer Pflanzenarten. Neben Zierpflanzen, wie beispielsweise Oleander, und Waldgewächsen, wie insbesondere Laubgehölzen, sind dies auch etliche zur menschlichen Ernährung angebaute Kulturpflanzen, wie Zitrusfrüchte, Weinreben, Pfirsich-, Kirsch-, Pflaumen- und Mandelbäume, Rosmarin und Kaffeepflanzen. Wissenschaftler der Europäischen Behörde für Lebensmittelsicherheit (EFSA) haben 563 Pflanzenarten ausgemacht, die der *Xylella fastidiosa* als Wirtspflanze dienen können.

Es sind vier Unterarten von *Xylella fastidiosa* bekannt, die ihren Ursprung in Nord-, Zentral- bzw. Südamerika haben. Die in Italien auftretende Unterart *Xylella fastidiosa pauca* führte zum Absterben tausender Hektar Oliven. Besonders starke Folgen hatte die Unterart *Xylella fastidiosa fastidiosa* für die Weinwirtschaft in Kalifornien und Florida. Diese Unterart befällt daneben auch Steinobst- und Zitruspflanzen in starkem Ausmaß.

Als Überträger des Krankheitserregers *Xylella fastidiosa* fungieren alle Insekten, die beim Saugen von Pflanzensäften das Bakterium in das Xylem der betroffenen Pflanze übertragen. Das Bakterium vermehrt sich in den Kiefergelenken der Insekten. Häufigster Überträger ist die Schaumzikade *Homalodisca vitripennis.*

Bisher sind weder Therapie noch Prophylaxe gegen das Olivenbaumsterben bekannt. Daher wird nicht *Xylella fastidiosa* selbst bekämpft, sondern versucht, die Verbreitung der übertragenden Insekten als Vektor zu minimieren, indem sichtlich befallene Äste abgeschnitten und im Extremfall befallene Bäume gefällt werden. Die befallenen Bäume lassen sich durch deutliches Welken der Krone erkennen. Dabei verfärben sich die Blätter gelegentlich gelb, manchmal braun, rollen sich ein und vertrocknen schließlich.

Da die Ausbreitung des Olivenbaumsterbens weiter voranschreitet und die damit verbundenen wirtschaftlichen Schäden immer mehr zunehmen, besteht ein Bedarf an Wirkstoffen zur Behandlung des Befalls von Pflanzen durch Bakterien der Gattung *Xylella.* Ganz besonders wünschenswert wäre es, wenn eine Erkrankung der Pflanzen verhindert werden könnte, wenn also ein Wirkstoff zur Verfügung stehen würde, der die Übertragung der Bakterien der Gattung *Xylella* auf die Pflanzen unterbinden oder zumindest die Wahrscheinlichkeit der Übertragung verringern würde.

### Darstellung der Erfindung

Der Erfindung, wie sie in den Ansprüchen gekennzeichnet ist, liegt die Aufgabe zugrunde, einen Wirkstoff zur Behandlung des Befalls von Pflanzen durch Bakterien der Gattung *Xylella* bereitzustellen.

Diese Aufgabe wird erfindungsgemäß durch die Verwendung von Holzessig und/oder Bambusessig und/oder deren Bestandteilen zur Behandlung des Befalls von Pflanzen durch Bakterien der Gattung *Xylella* gemäß Anspruch 1 und die Verwendung von Holzessig und/oder Bambusessig und/oder deren Bestandteilen als Repellent gegen Bakterien der Gattung *Xylella* übertragende Insekten zur Prophylaxe gegen den Befall von Pflanzen durch Bakterien der Gattung *Xylella* gemäß Anspruch 7 gelöst. Weitere vorteilhafte Details, Aspekte und Ausgestaltungen der vorliegenden Erfindung ergeben sich aus den abhängigen Ansprüchen, der Beschreibung, den Beispielen und den Figuren.

Die vorliegende Erfindung betrifft die Verwendung von Holzessig und/oder Bambusessig und/oder deren Bestandteilen zur Behandlung des Befalls von Pflanzen durch Bakterien der Gattung *Xylella.*

Untersuchungen haben gezeigt, dass Holzessig wie auch Bambusessig und auch einzelne Bestandteile von Holzessig und Bambusessig eine hohe Wirksamkeit bei der Behandlung von Pflanzen zeigen, die von Bakterien der Gattung *Xylella* befallen sind.

Unter einer "Behandlung" einer Pflanze werden im Rahmen des vorliegenden Textes sämtliche dem Fachmann bekannten Verfahren zum Aufbringen oder Einbringen von Wirkstoffen auf bzw. in Pflanzen verstanden. Am häufigsten werden Verfahren angewandt, bei denen die Pflanzen mit einer Lösung des Wirkstoff besprüht werden. Es sind aber auch alle sonstigen Methoden umfasst, die geeignet sind, Wirkstoffe auf bzw. in Pflanzen auf- bzw. einzubringen oder den Kontakt der Wirkstoffe mit den die Pflanzen befallenden Bakterien herzustellen.

Verfahren zur Herstellung von Bambusessig sind dem Fachmann hinlänglich bekannt. Beispielsweise entsteht bei der Pyrolyse von schlecht brennbarem Bambus zu Bambuskohle neben der Bambuskohle auch Bambusessig als Kondensationsprodukt des aufsteigenden Rauches. Der Bambusessig wird als braunes, rauchig riechendes Nebenprodukt aufgefangen. Daneben entstehen Bambusgas und Bambusteer.

Die Pyrolyse des Bambusmaterials zu Bambuskohle erfolgt üblicherweise bei einer Temperatur von 500°C bis 700°C. Für die Herstellung von Bambusessig sind tiefere Temperaturen günstiger. Einen optimalen Ertrag an Bambusessig erzielt man bei Durchführung der Pyrolyse bei 250°C bis 500 °C. Erhalten wird Bambusessig mit einem pH-Wert von 1,8. Der so gewonnene Bambuseesig enthält mehr als 200 organische Verbindungen. Nachgewiesen wurden gesättigte und ungesättigte Carbonsäuren, Alkohole, Aldehyde und ein hoher Anteil an Polyphenolen. Die vorliegende Erfindung umfasst auch die Verwendung dieser Bestandteile von Bambusessig einzeln oder in beliebigen Kombinationen zur Behandlung des Befalls von Pflanzen durch Bakterien der Gattung *Xylella.*

Die Gewinnung von Bambusessig erfolgt bislang vor allem in China und Afrika in einfachen Schlammöfen. Zunehmend wird aber auch in Europa eine industrielle Produktion mit technisch ausgereiften Verfahren aufgebaut.

Derzeit kommt Bambusessig zur Ansäuerung alkalischer Böden, als Bestandteil von Kosmetika, insbesondere Sprays und Seife, in der Dermatologie zur Behandlung von Hautinfektionen, und als antiseptisches und antimikrobiell wirkendes Mittel in der Lebensmittel- und Getränkeindustrie zum Einsatz sowie auch als unspezifisches Biostimulans.

Die Herstellung von Holzessig erfolgt analog zu dem für Bambusessig beschriebenen Vorgehen. Der Unterschied zur Herstellung von Bambusessig besteht lediglich darin, dass an Stelle von Bambus ein Holzmaterial eingesetzt wird. Vor Durchführung der Pyrolyse als trockene Destillation kann das Holzmaterial optional, ebenso wie das Bambusmaterial, in kleinere Stücke geschnitten werden, um eine optimale Ausbeute an Holz- bzw. Bambusessig zu erzielen.

Holzessig ist eine braune, sauer und scharf nach Holzkohle riechende und schmeckende, wässrige Flüssigkeit. Holzessig enthält, ebenso wie Bambusessig, eine Vielzahl unterschiedlicher organischer Substanzen, wobei Essigsäure den Hauptbestandteil darstellt.

Holzessig weist bis zu 12 % Essigsäure und Homologe, 2 % Methanol, 1 % Aceton, 1 % Methylacetat und 10 % gelöstem Holzteer (Brandöl Pyrrelin und Brandharze Pyrdain) auf. Die zu 100% fehlenden Anteile sind Wasser mit Spuren von Buttersäure, Phenol, Acetaldehyd und Ammoniumsalzen. Die vorliegende Erfindung umfasst auch die Verwendung dieser Bestandteile von Holzessig einzeln oder in beliebigen Kombinationen zur Behandlung des Befalls von Pflanzen durch Bakterien der Gattung *Xylella.*

Bei der Pyrolyse von Holz entsteht rund 20 bis 30 % Holzkohle, 30 bis 40 % Holzessig, 10 bis 15 % Holzteer und 10 bis 15 % Holzgas. Die entstehenden Dämpfe werden durch Kühlvorlagen kondensiert und können auf diese Weise gesammelt werden.

Zur Gewinnung von Holzessig werden Einkammeröfen (Pechöfen) und Zweikammeröfen (Retorten) eingesetzt, da bei der Verkohlung von Holz nach hergebrachter Weise in Kohlenmeilern der Holzessig teilweise in die Luft entweicht oder verbrennt.

Der Holzessig wird als fäulnishemmendes Anstrichmittel, als Insektizid, zur Konservierung von Holz und Tauen, sowie zur Konservierung von Fleischwaren (kalte Räucherung) verwendet. In der Veterinärmedizin wird Holzessig zur Behandlung von Maul- und Klauenseuche, Räude und Krätze eingesetzt, aber auch als äußerliches aufgetragenes Heilmittel bei Wunden verwendet. Ferner dient er zur Herstellung von Bleizucker, essigsaurer Tonerde (Aluminiumdiacetat) und anderen Präparaten.

Bambusessig und Holzessig stellen bei der Pyrolyse von biologischen Materialien anfallende hochwirksame Konzentrate dar. Die Herstellung der Wirkstoffe ist extrem kostengünstig und einfach etablierbar. Es zeigt sich eine ausgezeichnete Wirksamkeit bei der Behandlung des von Bakterien der Gattung *Xylella* verursachten Olivenbaumsterbens.

Eine besonders hohe Wirksamkeit zeigt sich bei der Verwendung von Holzessig und/oder Bambusessig und/oder deren Bestandteilen bei der Behandlung von Pflanzen, die von Bakterien der Art *Xylella fastidiosa* befallen sind.

Eine ganz besonders hohe Wirksamkeit zeigt sich bei der Verwendung von Holzessig und/oder Bambusessig und/oder deren Bestandteilen bei der Behandlung von Pflanzen, die von Bakterien der Subspecies *Xylella fastidiosa fastidiosa, Xylella fastidiosa pauca oder Xylella fastidiosa mirabilis* befallen sind.

Bei den befallenen Pflanzen kann es sich um Nutzbäume, Lorbeerbüsche, Weidenblatt-Akazien, Lavendel, Rosmarin, Australischen Rosmarin, Kreuzblumen, Zitrusfrüchte, oder Oleander handeln.

Eine besonders gute Wirksamkeit bei der Behandlung von Pflanzen gegen den Befall mit Bakterien der Gattung *Xylella,* besonders der Art *Xylella fastidiosa* und insbesondere der Subspecies *Xylella fastidiosa fastidiosa, Xylella fastidiosa pauca oder Xylella fastidiosa mirabilis,* zeigt sich, wenn es sich bei den Pflanzen um Olivenbäume, Kirschbäume, Mandelbäume, Pfirsichbäume oder Pflaumenbäume handelt.

Eine ganz besonders gute Wirksamkeit bei der Behandlung von Pflanzen gegen den Befall mit Bakterien der Gattung *Xylella,* besonders der Art *Xylella fastidiosa* und insbesondere der Subspecies *Xylella fastidiosa fastidiosa, Xylella fastidiosa pauca oder Xylella fastidiosa mirabilis,* zeigt sich, wenn es sich bei den Pflanzen um *Acacia dealbata, Acacia saligna, Acer pseudoplatanus, Amaranthus retroflexus, Anthyllis hermanniae, Artemisia arborescens, Asparagus acutifolius, Calicotome spinosa, Calicotome villosa, Catharanthus, Cercis siliquastrum, Chenopodium album, Cistus albidus, Cistus creticus, Cistus monspeliensis, Cistus salviifolius, Coffea, Convolvulus cneorum, Coprosma repens, Coronilla glauca, Coronilla valentina, Cytisus scoparius, Cytisus villosus, Dimorphoteca fructicosa, Dodonaea viscosa, Elaeagnus angustifolia, Eremophila maculata, Erigeron bonariensis, Erigeron sumatrensis (syn. Conyza sumatrensis), Erysimum, Euphorbia chamaesyce, Euphorbia terracina, Euryops chrysanthemoides, Euryops pectinatus, Ficus carica, Fraxinus angustifolia, Genista corsica, Genista ephedroides, Genista lucida, Genista x spachiana (syn. Cytisus racemosus), Grevillea juniperina, Hebe, Helichrysum italicum, Helichrysum stoechas, Heliotropium europaeum, Juglans regia, Laurus nobilis, Lavandula x allardii (syn. Lavandula x heterophylla), Lavandula angustifolia, Lavandula x chaytorae, Lavandula dentata, Lavandula x intermedia, Lavandula stoechas, Lonicera japonica, Medicago sativa, Metrosideros excelsa, Myoporum insulare, Myrtus communis, Nerium oleander, Olea europaea, Pelargonium x fragans, Pelargonium graveolens, Phagnalon saxatile, Phillyrea latifolia, Polygala myrtifolia, Prunus armeniaca, Prunus avium, Prunus cerasifera, Prunus cerasus, Prunus domestica, Prunus dulcis, Quercus suber, Rhamnus alaternus, Rosa canina, Rosmarinus officinalis, Spartium junceum, Streptocarpus, Teucrium capitatum, Ulex europaeus, Ulex minor, Veronica elliptica, Vinca, Vitis vinifera, Westringia fruticosa* oder *Westringia glabra* handelt.

Die vorliegende Erfindung umfasst auch die Verwendung von Holzessig und/oder Bambusessig und/oder deren Bestandteilen als Repellent gegen Bakterien der Gattung *Xylella* übertragende Insekten zur Prophylaxe gegen den Befall von Pflanzen durch Bakterien der Gattung *Xylella.* Dabei können die Bestandteile von Bambusessig und Holzessig einzeln oder in beliebigen Kombinationen als Repellent zur Prophylaxe gegen den Befall von Pflanzen durch Bakterien der Gattung *Xylella* verwendet werden.

Es hat sich gezeigt, dass Holzessig wie auch Bambusessig und auch einzelne Bestandteile von Holzessig und Bambusessig eine hohe Wirksamkeit als Repellent gegen Bakterien der Gattung *Xylella* übertragende Insekten aufweist. Nach der prophylaktischen Anwendung von Holzessig, Bambusessig oder der Bestandteile von Holzessig und Bambusessig werden Insekten von dem Befall der behandelten Pflanzen abgehalten. Dadurch können die Übertragung von Bakterien der Gattung *Xylella* auf die Pflanzen und eine nachfolgende Erkrankung der Pflanzen wirksam verhindert werden.

Eine besonders hohe Wirksamkeit als Repellent zeigt sich bei der Verwendung von Holzessig und/oder Bambusessig und/oder deren Bestandteilen zur Prophylaxe gegen den Befall von Pflanzen durch Bakterien der Art *Xylella fastidiosa.*

Eine ganz besonders hohe Wirksamkeit als Repellent zeigt sich bei der Verwendung von Holzessig und/oder Bambusessig und/oder deren Bestandteilen zur Prophylaxe gegen den Befall von Pflanzen durch Bakterien der Subspecies *Xylella fastidiosa fastidiosa, Xylella fastidiosa pauca oder Xylella fastidiosa mirabilis.*

Bei den prophylaktisch geschützten Pflanzen kann es sich um Nutzbäume, Lorbeerbüsche, Weidenblatt-Akazien, Lavendel, Rosmarin, Australischen Rosmarin, Kreuzblumen, Zitrusfrüchte, oder Oleander handeln.

Eine besonders gute Wirksamkeit als Repellent zeigt sich bei der Verwendung von Holzessig, Bambusessig und deren Bestandteilen zur Prophylaxe gegen den Befall von Pflanzen mit Bakterien der Gattung *Xylella,* besonders der Art *Xylella fastidiosa* und insbesondere der Subspecies *Xylella fastidiosa fastidiosa, Xylella fastidiosa pauca oder Xylella fastidiosa mirabilis,* wenn es sich bei den prophylaktisch geschützten Pflanzen um Olivenbäume, Kirschbäume, Mandelbäume, Pfirsichbäume oder Pflaumenbäume handelt.

Eine ganz besonders gute Wirksamkeit als Repellent zeigt sich bei der Verwendung von Holzessig, Bambusessig und deren Bestandteilen zur Prophylaxe gegen den Befall von Pflanzen mit Bakterien der Gattung *Xylella,* besonders der Art *Xylella fastidiosa* und insbesondere der Subspecies *Xylella fastidiosa fastidiosa, Xylella fastidiosa pauca oder Xylella fastidiosa mirabilis,* wenn es sich bei den prophylaktisch geschützten Pflanzen um *Acacia dealbata, Acacia saligna, Acer pseudoplatanus, Amaranthus retroflexus, Anthyllis hermanniae, Artemisia arborescens, Asparagus acutifolius, Calicotome spinosa, Calicotome villosa, Catharanthus, Cercis siliquastrum, Chenopodium album, Cistus albidus, Cistus creticus, Cistus monspeliensis, Cistus salviifolius, Coffea, Convolvulus cneorum, Coprosma repens, Coronilla glauca, Coronilla valentina, Cytisus scoparius, Cytisus villosus, Dimorphoteca fructicosa, Dodonaea viscosa, Elaeagnus angustifolia, Eremophila maculata, Erigeron bonariensis, Erigeron sumatrensis (syn. Conyza sumatrensis), Erysimum, Euphorbia chamaesyce, Euphorbia terracina, Euryops chrysanthemoides, Euryops pectinatus, Ficus carica, Fraxinus angustifolia, Genista corsica, Genista ephedroides, Genista lucida, Genista × spachiana (syn. Cytisus racemosus), Grevillea juniperina, Hebe, Helichrysum italicum, Helichrysum stoechas, Heliotropium europaeum, Juglans regia, Laurus nobilis, Lavandula × allardii (syn. Lavandula × heterophylla), Lavandula angustifolia, Lavandula × chaytorae, Lavandula dentata, Lavandula × intermedia, Lavandula stoechas, Lonicera japonica, Medicago sativa, Metrosideros excelsa, Myoporum insulare, Myrtus communis, Nerium oleander, Olea europaea, Pelargonium × fragans, Pelargonium graveolens, Phagnalon saxatile, Phillyrea latifolia, Polygala myrtifolia, Prunus armeniaca, Prunus avium, Prunus cerasifera, Prunus cerasus, Prunus domestica, Prunus dulcis, Quercus suber, Rhamnus alaternus, Rosa canina, Rosmarinus officinalis, Spartium junceum, Streptocarpus, Teucrium capitatum, Ulex europaeus, Ulex minor, Veronica elliptica, Vinca, Vitis vinifera, Westringia fruticosa* oder *Westringia glabra* handelt.

Eine besonders gute Wirksamkeit von Holzessig und/oder Bambusessig und/oder deren Bestandteilen als Repellent gegen Bakterien der Gattung *Xylella* übertragende Insekten zur Prophylaxe gegen den Befall von Pflanzen durch Bakterien der Gattung *Xylella* zeigt sich, wenn es sich bei den Insekten um Insekten aus der Familie der Zwergzikaden (*Cicadellidae*), der Familie der Schaumzikaden (*Aphrophoridae*) oder der Familie der Blutzikaden (*Cercopidae*) handelt.

Eine ganz besonders gute Wirkung von Holzessig und/oder Bambusessig und/oder deren Bestandteilen als Repellent gegen Bakterien der Gattung *Xylella* übertragende Insekten zur Prophylaxe gegen den Befall von Pflanzen durch Bakterien der Gattung *Xylella* zeigt sich, wenn es sich bei den Insekten um Insekten der Art Wiesenschaumzikade (*Philaenus spumarius*), der Art Feldschaumzikade (*Neophilaenus campestris*) oder der Art *Philaenus italosignus* handelt.

### Kurze Beschreibung der Zeichnungen

Zur Illustration der Erfindung und zur Verdeutlichung ihrer Vorzüge werden nachfolgend Ausführungsbeispiele angegeben. Diese Ausführungsbeispiele sollen im Zusammenhang mit den Zeichnungen näher erläutert werden. Es versteht sich von selbst, dass diese Angaben die Erfindung nicht beschränken sollen. Es zeigen
- Fig. 1: eine Auftragung der Menge an Bakterien *Xylella fastidiosa fastidioa* in Abhängigkeit von der Konzentration an Bambusessig in einem Flüssigmedium;
- Fig. 2: eine Auftragung der Menge an Bakterien *Xylella fastidiosa pauca* in Abhängigkeit von der Konzentration an Bambusessig in einem Flüssigmedium;
- Fig. 3: einen Vergleich der von *Drosophila* Larven in einem bestimmten Zeitraum in einem 2500 ppm Bambusessig enthaltenden Nahrungsbrei bzw. in einem Nahrungsbrei ohne Bambusessig zurückgelegten euklidischen Distanz;
- Fig.4: einen Vergleich der gemittelten Kriechgeschwindigkeit von *Drosophila* Larven in einem 2500 ppm Bambusessig enthaltenden Nahrungsbrei bzw. in einem Nahrungsbrei ohne Bambusessig;
- Fig. 5: einen Vergleich des zeitlichen Verlaufs der Kriechgeschwindigkeit von *Drosophila* Larven in einem 2500 ppm Bambusessig enthaltenden Nahrungsbrei (1) bzw. in einem Nahrungsbrei ohne Bambusessig (2).

### Wege zur Ausführung der Erfindung

### Beispiel 1:

### Untersuchung des Wachstums von Bakterien Xylella fastidiosa fastidioa in einem Flüssigmedium mit unterschiedlichen Konzentrationen an Bambusessig

Bakterien *Xylella fastidiosa fastidioa* wurden im Brutschrank in einem PD3 Flüssigmedium über mehrere Tage vermehrt. Das Flüssigmedium wurde vor der Beimpfung mit Bambusessig in unterschiedlichen Konzentrationen versetzt. Die in den verschiedenen Experimenten eingesetzten Konzentrationen an Bambusessig sind in Tabelle 1 angegeben.

**Tabelle 1**

| Konzentration Bambusessig | Verdünnung in Wasser | pH |
|---|---|---|
| 0 | Kontrolle | 6.98 |
| 1 | 1: 10⁹ | 6.98 |
| 2 | 1: 10⁸ | 6.98 |
| 3 | 1: 10⁷ | 6.98 |
| 4 | 1: 10⁶ | 6.98 |
| 5 | 1: 10⁵ | 6.98 |
| 6 | 1: 10⁴ | 6.98 |
| 7 | 1: 10³ | 6.98 |
| 8 | 1: 10² | 6.92 |
| 9 | 1: 10 | 6.39 |

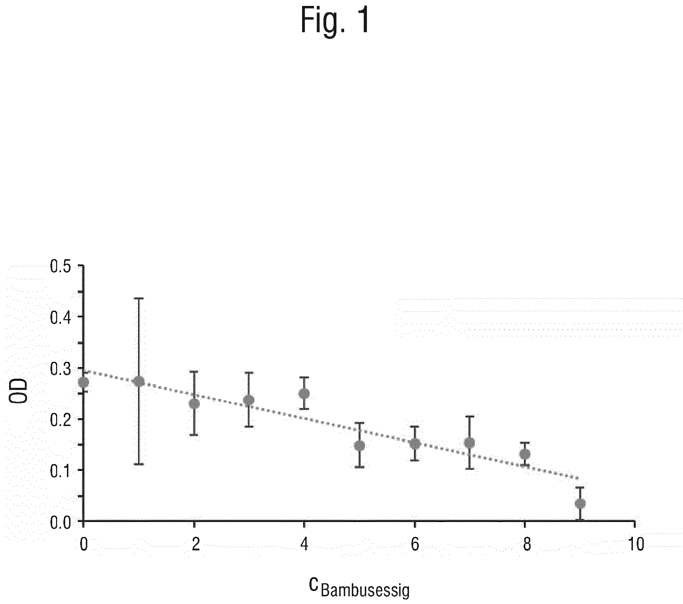

Nach einer festgelegten Inkubationszeit wurde gemäß Standardverfahren zur Messung der optischen Dichte die Menge an Bakterien in der Lösung bestimmt. Die Ergebnisse der Messungen sind in Figur 1 dargestellt.

Die Experimente zeigen eindeutig, dass das Wachstum von Bakterien *Xylella fastidiosa fastidioa* durch Bambusessig gehemmt wird. Mit zunehmender Konzentration an Bambusessig zeigt sich eine zunehmende Hemmung des Wachstums.

Bambusessig zeigt eine eindeutige, starke Wirksamkeit gegen *Xylella fastidiosa fastidioa.*

### Beispiel 2:

### Untersuchung des Wachstums von Bakterien Xylella fastidiosa pauca in einem Flüssigmedium mit unterschiedlichen Konzentrationen an Bambusessig

Bakterien *Xylella fastidiosa pauca* wurden im Brutschrank in einem PD3 Flüssigmedium über mehrere Tage vermehrt. Das Flüssigmedium wurde vor der Beimpfung mit Bambusessig in unterschiedlichen Konzentrationen versetzt. Die in den verschiedenen Experimenten eingesetzten Konzentrationen an Bambusessig sind in Tabelle 2 angegeben.

**Tabelle 2**

| Konzentration Bambusessig | Verdünnung in Wasser | pH |
|---|---|---|
| 0 | Kontrolle | 6.98 |
| 1 | 1: 10⁹ | 6.98 |
| 2 | 1: 10⁸ | 6.98 |
| 3 | 1: 10⁷ | 6.98 |
| 4 | 1: 10⁶ | 6.98 |
| 5 | 1: 10⁵ | 6.98 |
| 6 | 1: 10⁴ | 6.98 |
| 7 | 1: 10³ | 6.98 |
| 8 | 1: 10² | 6.92 |
| 9 | 1: 10 | 6.39 |

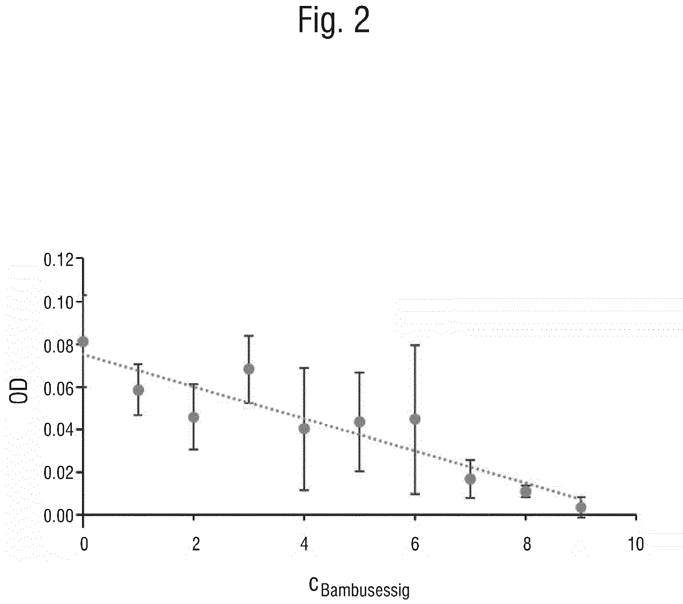

Nach einer festgelegten Inkubationszeit wurde gemäß Standardverfahren zur Messung der optischen Dichte die Menge an Bakterien in der Lösung bestimmt. Die Ergebnisse der Messungen sind in Figur 2 dargestellt.

Die Experimente zeigen eindeutig, dass das Wachstum von Bakterien *Xylella fastidiosa pauca* durch Bambusessig gehemmt wird. Mit zunehmender Konzentration an Bambusessig zeigt sich eine zunehmende Hemmung des Wachstums.

Bambusessig zeigt eine eindeutige, starke Wirksamkeit gegen *Xylella fastidiosa pauca.*

### Beispiel 3:

### Untersuchung der Auswirkung von Bambusessig auf die Bewegung von Drosophila Larven

Untersucht wurde die Auswirkung von Bambusessig auf das Bewegungsmuster von *Drosophila* Larven. Für die Experimente wurden die Larven in einem Standard-Nahrungsbrei gehalten. Zum einen wurde der Standard-Nahrungsbrei ohne Zusätze verwendet (Kontrolle), zum anderen wurde dem Nahrungsbrei Bambusessig in einer Menge zugegeben, sodass eine Konzentration von 2500 ppm Bambusessig in dem Nahrungsbrei eingestellt wurde.

Für die Analyse der Bewegung der *Drosophila* Larven wurden Filme mit 10 Frames pro Sekunde für 5 Minuten aufgenommen. Für jeden Zeitpunkt (Frame) wurde ein Tiff-Bild mit 4 MP generiert. Die Bildsequenzen bildeten die Grundlage für die anschließende Konturdetektion der einzelnen Tiere durch interne Computer Vision gestützte Software. Die Kontur der detektierten Individuen diente anschließend als Grundlage für die Berechnung der untersuchten Parameter.

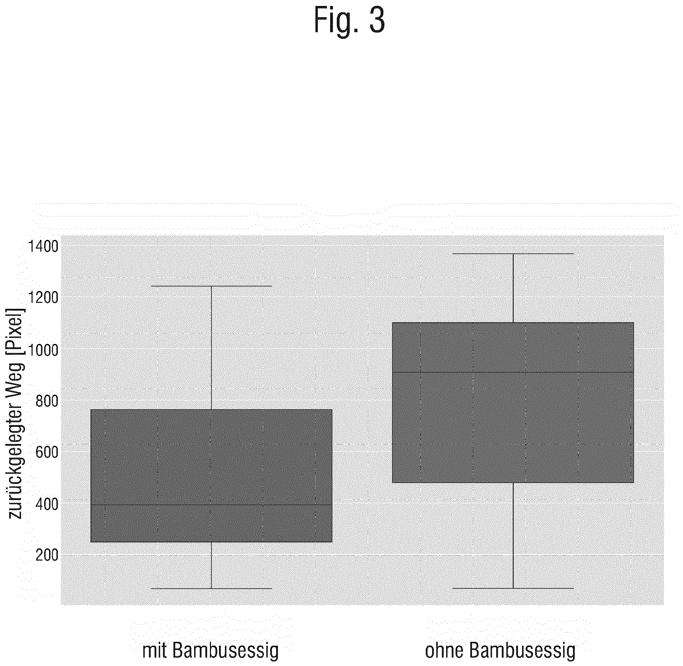

Die Figur 3 zeigt einen Vergleich der von *Drosophila* Larven in einem bestimmten Zeitraum in einem 2500 ppm Bambusessig enthaltenden Nahrungsbrei bzw. in einem Nahrungsbrei ohne Bambusessig zurückgelegten euklidischen Distanz. Der euklidische Abstand zweier Punkte in der Ebene ist die Länge der Strecke, die diese zwei Punkte verbindet.

Es ist eindeutig zu erkennen, dass ein signifikanter Unterschied bei der Distanz vom Ursprung besteht. Die *Drosophila* Larven, die keinem Bambusessig ausgesetzt waren, legten eine deutlich größere Distanz zum Startpunkt zurück. Dies deutet darauf hin, dass der Zusatz von Bambusessig häufige Richtungswechsel und kreisläufige Bewegungen der *Drosophila* Larven induziert.

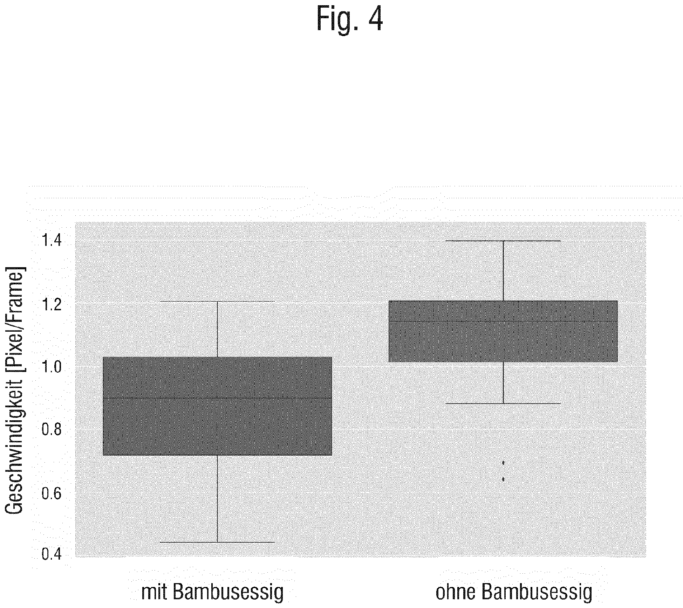

Die Figur 4 zeigt einen Vergleich der gemittelten Kriechgeschwindigkeit von *Drosophila* Larven in einem 2500 ppm Bambusessig enthaltenden Nahrungsbrei bzw. in einem Nahrungsbrei ohne Bambusessig. Es ist eindeutig zu erkennen, dass ein signifikanter Unterschied in der mittleren Kriechgeschwindigkeit besteht. Die *Drosophila* Larven, die keinem Bambusessig ausgesetzt waren, bewegen sich mit einer deutlich höheren Kriechgeschwindigkeit. Dies belegt, dass der Zusatz von Bambusessig zu einer signifikant verringerten mittleren Kriechgeschwindigkeit der *Drosophila* Larven führt.

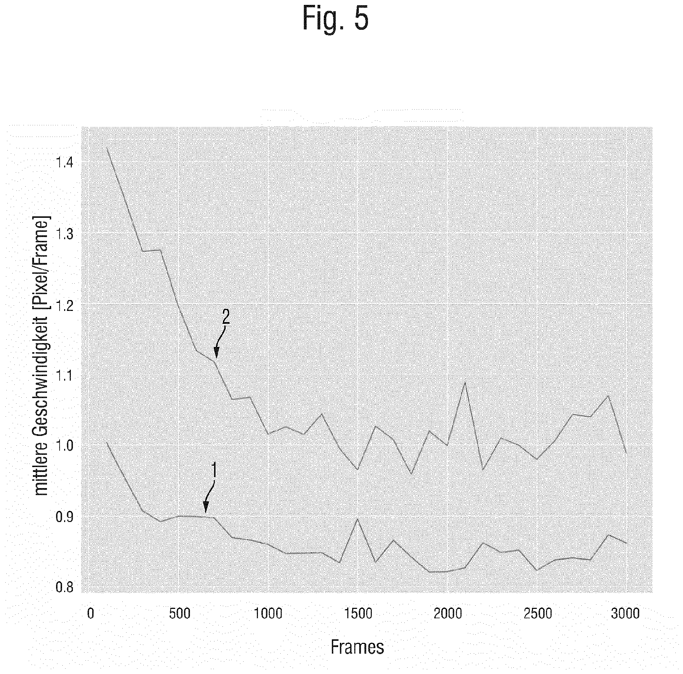

Die Figur 5 zeigt einen Vergleich des zeitlichen Verlaufs der Kriechgeschwindigkeit von *Drosophila* Larven in einem 2500 ppm Bambusessig enthaltenden Nahrungsbrei (1) bzw. in einem Nahrungsbrei ohne Bambusessig (2). Es ist eindeutig zu erkennen, dass ein signifikanter Unterschied im zeitlichen Verlauf der Kriechgeschwindigkeit besteht. Die *Drosophila* Larven, die keinem Bambusessig ausgesetzt waren, bewegen sich zu jedem Zeitpunkt mit einer deutlich höheren Kriechgeschwindigkeit. Dies belegt, dass der Zusatz von Bambusessig zu einer dauerhaft verringerten Kriechgeschwindigkeit der *Drosophila* Larven führt.

Die beschriebenen Untersuchungen an *Drosophila* Larven als Modell legen die Vermutung nahe, dass Bambusessig als Repellent wirkt. Es ist damit zu rechnen, dass Bambusessig eine hohe Wirksamkeit bei der Prophylaxe gegen den Befall von Pflanzen durch Bakterien der Gattung *Xylella* aufweist.

## Patentansprüche

1. Verwendung von Holzessig und/oder Bambusessig und/oder deren Bestandteilen zur Behandlung des Befalls von Pflanzen durch Bakterien der Gattung *Xylella.*

2. Verwendung nach Anspruch 1, **dadurch gekennzeichnet, dass** es sich um einen Befall von Pflanzen durch Bakterien der Art *Xylella fastidiosa* handelt.

3. Verwendung nach Anspruch 2, **dadurch gekennzeichnet, dass** es sich um Bakterien der Subspecies *Xylella fastidiosa fastidiosa, Xylella fastidiosa pauca oder Xylella fastidiosa mirabilis* handelt.

4. Verwendung nach einem der Ansprüche 1 bis 3, **dadurch gekennzeichnet, dass** es sich bei den Pflanzen um Nutzbäume, Lorbeerbüsche, Weidenblatt-Akazien, Lavendel, Rosmarin, Australischen Rosmarin, Kreuzblumen, Zitrusfrüchte, oder Oleander handelt.

5. Verwendung nach Anspruch 4, **dadurch gekennzeichnet, dass** es sich um Olivenbäume, Kirschbäume, Mandelbäume, Pfirsichbäume oder Pflaumenbäume handelt.

6. Verwendung nach Anspruch 1, **dadurch gekennzeichnet, dass** es sich bei den Pflanzen um *Acacia dealbata, Acacia saligna, Acer pseudoplatanus, Amaranthus retroflexus, Anthyllis hermanniae, Artemisia arborescens, Asparagus acutifolius, Calicotome spinosa, Calicotome villosa, Catharanthus, Cercis siliquastrum, Chenopodium album, Cistus albidus, Cistus creticus, Cistus monspeliensis, Cistus salviifolius, Coffea, Convolvulus cneorum, Coprosma repens, Coronilla glauca, Coronilla valentina, Cytisus scoparius, Cytisus villosus, Dimorphoteca fructicosa, Dodonaea viscosa, Elaeagnus angustifolia, Eremophila maculata, Erigeron bonariensis, Erigeron sumatrensis (syn. Conyza sumatrensis), Erysimum, Euphorbia chamaesyce, Euphorbia terracina, Euryops chrysanthemoides, Euryops pectinatus, Ficus carica, Fraxinus angustifolia, Genista corsica, Genista ephedroides, Genista lucida, Genista × spachiana (syn. Cytisus racemosus), Grevillea juniperina, Hebe, Helichrysum italicum, Helichrysum stoechas, Heliotropium europaeum, Juglans regia, Laurus nobilis, Lavandula × allardii (syn. Lavandula × heterophylla), Lavandula angustifolia, Lavandula × chaytorae, Lavandula dentata, Lavandula × intermedia, Lavandula stoechas, Lonicera japonica, Medicago sativa, Metrosideros excelsa, Myoporum insulare, Myrtus communis, Nerium oleander, Olea europaea, Pelargonium × fragans, Pelargonium graveolens, Phagnalon saxatile, Phillyrea latifolia, Polygala myrtifolia, Prunus armeniaca, Prunus avium, Prunus cerasifera, Prunus cerasus, Prunus domestica, Prunus dulcis, Quercus suber, Rhamnus alaternus, Rosa canina, Rosmarinus officinalis, Spartium junceum, Streptocarpus, Teucrium capitatum, Ulex europaeus, Ulex minor, Veronica elliptica, Vinca, Vitis vinifera, Westringia fruticosa* oder *Westringia glabra* handelt.

7. Verwendung von Holzessig und/oder Bambusessig und/oder deren Bestandteilen als Repellent gegen Bakterien der Gattung *Xylella* übertragende Insekten zur Prophylaxe gegen den Befall von Pflanzen durch Bakterien der Gattung *Xylella.*

8. Verwendung nach Anspruch 7, **dadurch gekennzeichnet, dass** es sich um Bakterien der Art *Xylella fastidiosa* handelt.

9. Verwendung nach Anspruch 8, **dadurch gekennzeichnet, dass** es sich um Bakterien der Subspecies *Xylella fastidiosa fastidiosa, Xylella fastidiosa pauca oder Xylella fastidiosa mirabilis* handelt.

10. Verwendung nach einem der Ansprüche 7 bis 9, **dadurch gekennzeichnet, dass** es sich bei den Pflanzen um Nutzbäume, Lorbeerbüsche, Weidenblatt-Akazien, Lavendel, Rosmarin, Australischen Rosmarin, Kreuzblumen, Zitrusfrüchte, oder Oleander handelt.

11. Verwendung nach Anspruch 10, **dadurch gekennzeichnet, dass** es sich um Olivenbäume, Kirschbäume, Mandelbäume, Pfirsichbäume oder Pflaumenbäume handelt.

12. Verwendung nach Anspruch 7, **dadurch gekennzeichnet, dass** es sich bei den Pflanzen um *Acacia dealbata, Acacia saligna, Acer pseudoplatanus, Amaranthus retroflexus, Anthyllis hermanniae, Artemisia arborescens, Asparagus acutifolius, Calicotome spinosa, Calicotome villosa, Catharanthus, Cercis siliquastrum, Chenopodium album, Cistus albidus, Cistus creticus, Cistus monspeliensis, Cistus salviifolius, Coffea, Convolvulus cneorum, Coprosma repens, Coronilla glauca, Coronilla valentina, Cytisus scoparius, Cytisus villosus, Dimorphoteca fructicosa, Dodonaea viscosa, Elaeagnus angustifolia, Eremophila maculata, Erigeron bonariensis, Erigeron sumatrensis (syn. Conyza sumatrensis), Erysimum, Euphorbia chamaesyce, Euphorbia terracina, Euryops chrysanthemoides, Euryops pectinatus, Ficus carica, Fraxinus angustifolia, Genista corsica, Genista ephedroides, Genista lucida, Genista × spachiana (syn. Cytisus racemosus), Grevillea juniperina, Hebe, Helichrysum italicum, Helichrysum stoechas, Heliotropium europaeum, Juglans regia, Laurus nobilis, Lavandula × allardii (syn. Lavandula × heterophylla), Lavandula angustifolia, Lavandula × chaytorae, Lavandula dentata, Lavandula × intermedia, Lavandula stoechas, Lonicera japonica, Medicago sativa, Metrosideros excelsa, Myoporum insulare, Myrtus communis, Nerium oleander, Olea europaea, Pelargonium × fragans, Pelargonium graveolens, Phagnalon saxatile, Phillyrea latifolia, Polygala myrtifolia, Prunus armeniaca, Prunus avium, Prunus cerasifera, Prunus cerasus, Prunus domestica, Prunus dulcis, Quercus suber, Rhamnus alaternus, Rosa canina, Rosmarinus officinalis, Spartium junceum, Streptocarpus, Teucrium capitatum, Ulex europaeus, Ulex minor, Veronica elliptica, Vinca, Vitis vinifera, Westringia fruticosa* oder *Westringia glabra* handelt.

13. Verwendung nach einem der Ansprüche 7 bis 12, **dadurch gekennzeichnet, dass** es sich bei den Bakterien der Gattung *Xylella* übertragenden Insekten um Insekten aus der Familie der Zwergzikaden (*Cicadellidae*), der Familie der Schaumzikaden (*Aphrophoridae*) oder der Familie der Blutzikaden (*Cercopidae*) handelt.

14. Verwendung nach Anspruche 13, **dadurch gekennzeichnet, dass** es sich bei den Bakterien der Gattung *Xylella* übertragenden Insekten um Insekten der Art Wiesenschaumzikade (*Philaenus spumarius*), der Art Feldschaumzikade (*Neophilaenus campestris*) oder der Art *Philaenus italosignus* handelt.
